(19) Europäisches Patentamt
European Patent Office
Office européen des brevets

(11) **EP 4 498 473 A1**

(12) **EUROPEAN PATENT APPLICATION**

(43) Date of publication:
**29.01.2025 Bulletin 2025/05**

(21) Application number: **24185569.1**

(22) Date of filing: **28.06.2024**

(51) International Patent Classification (IPC):
**H01M 10/0587** (2010.01)    **H01M 50/531** (2021.01)
**H01M 50/586** (2021.01)    **H01M 10/0525** (2010.01)

(52) Cooperative Patent Classification (CPC):
**H01M 10/0587; H01M 50/531; H01M 50/586;**
H01M 10/0525; H01M 50/46; Y02E 60/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **26.07.2023 CN 202310923260**

(71) Applicant: **Ningde Amperex Technology Ltd.**
**Ningde City, Fujian 352100 (CN)**

(72) Inventors:
- **ZHANG, Juntao**
  **Ningde City, Fujian Province, People s Republic of**
  **China, 352100 (CN)**

- **YUAN, Xiulan**
  **Ningde City, Fujian Province, People s Republic of**
  **China, 352100 (CN)**
- **SU, Shiwei**
  **Ningde City, Fujian Province, People s Republic of**
  **China, 352100 (CN)**
- **TIAN, Jiao**
  **Ningde City, Fujian Province, People s Republic of**
  **China, 352100 (CN)**

(74) Representative: **Icosa**
**83 avenue Denfert-Rochereau**
**75014 Paris (FR)**

(54) **SECONDARY BATTERY AND ELECTRICAL DEVICE**

(57) A secondary battery (100) includes an electrode assembly. Along a winding direction of the electrode assembly, a distance between a first winding start end (101) of a first electrode plate (111) and a first tab (120) is $L_1$, and a distance between a second winding start end (102) of a second electrode plate (112) and a second tab (130) is $L_2$, $0.8 \leq L_1/L_2 \leq 1.2$. The first electrode plate (111) includes a first blank foil region (111b). The first blank foil region (111b) is a winding end section of the first electrode plate (111). The second electrode plate (112) includes a second blank foil region (112b). The second blank foil region (112b) is a winding end section of the second electrode plate (112). The first tab (120) is connected to the first blank foil region (111b), and the second tab (130) is connected to the second blank foil region (112b). A first insulation layer (140) is provided on the first blank foil region (111b).

FIG. 1

## Description

## BACKGROUND

## 1. Technical Field

This application relates to the technical field of batteries, and in particular, to a secondary battery and an electrical device.

## 2. Description of the Related Art

Batteries are widely used in the fields such as portable electronic devices, electric transportation, electric tools, unmanned aerial vehicles, and energy storage devices. The reliability of the batteries is important during manufacturing of the batteries. Therefore, how to improve the reliability of a battery is a pressing technical challenge in the battery technology.

## SUMMARY

This application provides a secondary battery and an electrical device so that the reliability of the secondary battery is improved significantly.

This application is implemented through the following technical solutions:

According to a first aspect, an embodiment of this application provides a secondary battery. The secondary battery includes an electrode assembly, a first tab, and a second tab. The electrode assembly includes a first electrode plate, a second electrode plate, and a separator. The separator is provided between the first electrode plate and the second electrode plate. The first electrode plate includes a first active material region. The first active material region includes a first winding start end. The second electrode plate includes a second active material region. The second active material region includes a second winding start end. The first tab is electrically connected to the first electrode plate. The second tab is electrically connected to the second electrode plate. Along the winding direction of the electrode assembly, a distance between the first winding start end and the first tab is $L_1$, and a distance between the second winding start end and the second tab is $L_2$, satisfying: $0.8 \leq L_1/L_2 \leq 1.2$. The first electrode plate includes a first blank foil region. The first blank foil region is configured to be a winding end section of the first electrode plate. The second electrode plate includes a second blank foil region. The second blank foil region is configured to be a winding end section of the second electrode plate. The first tab is connected to the first blank foil region. The second tab is connected to the second blank foil region. A first insulation layer is further provided on the first blank foil region.

In the secondary battery according to this embodiment of this application, a stroke of the current on the first electrode plate is substantially the same as a stroke of the current on the second electrode plate. In this way, a magnetic field generated on the first electrode plate can substantially counteract the magnetic field generated on the second electrode plate, thereby reducing the impact caused by the magnetic field generated by the secondary battery onto the electrical device. In addition, the first insulation layer is disposed in the first blank foil region, which means that the first insulation layer is disposed in the end section of the first electrode plate. In this way, the first insulation layer can, on the one hand, wrap the burrs on the first electrode plate, thereby reducing the probability that the burrs penetrate the separator and contact the shell. On the other hand, the above arrangement reduces the probability that the burrs on the first electrode plate penetrate the separator and contact the second electrode plate to cause a short circuit between the positive electrode and the negative electrode. Further, because the stroke of the current on the first electrode plate is substantially the same as the stroke of the current on the second electrode plate, the first tab and the second tab can be spaced apart in the winding direction of the electrode assembly, and the first insulation layer can cover the first tab, thereby reducing the probability that the burrs on the first tab penetrate the separator and contact the second electrode plate or the shell.

According to some embodiments of this application, both an inner surface and an outer surface of the first blank foil region are provided with the first insulation layers.

In the above technical solution, both the inner surface and the outer surface of the first blank foil region are coated with the first insulation layer, so that the two first insulation layers can provide all-round protection for the first blank foil region, thereby reducing the probability that the burrs in the first blank foil region penetrate the separator and contact the second electrode plate or the shell.

According to some embodiments of this application, the first insulation layer is configured to be a bonding layer bonded to the inner surface and the outer surfaces of the first blank foil region. Along a width direction of the first electrode plate, the first electrode plate includes a first edge and a second edge. The first insulation layers on both the inner surface and the outer surface of the first blank foil region protrude beyond the first edge and the second edge.

In the above technical solution, the inner surface and the outer surface of the first blank foil region are both coated by two first insulation layers. Moreover, the protruding part of the first insulation layer on the inner surface of the first blank foil region beyond the first edge can be bonded to the protruding part of the first insulation layer on the outer surface of the first blank foil region beyond the first edge, so that the first edge of the first blank foil region can also be coated by two first insulation layers; and the protruding part of the first insulation layer on the inner surface of the first blank foil region beyond the second edge can be bonded to the protruding part of the first insulation layer on the outer surface of the first blank foil region beyond the second edge, so that the second edge of the first blank foil region can also be coated by two first insulation layers.

According to some embodiments of this application, one side of the first insulation layer on the inner surface of the first blank foil region is oriented toward one side of the first insulation layer on the outer surface of the first blank foil region, and the two sides oriented toward each other are the bonding layers.

In the above technical solution, one first insulation layer can be bonded to the inner surface of the first blank foil region, and the other first insulation layer can be bonded to the outer surface of the first blank foil region. In addition, because the sides of the two first insulation layers, which are oriented toward each other, are configured to be bonding sides, the protruding parts of the two first insulation layers beyond the first edge can be bonded and fixed together, and the protruding parts of the two first insulation layers beyond the second edge can also be bonded and fixed together, thereby more comprehensively protecting the first blank foil region, and reducing the probability that the burrs in the first blank foil region penetrate the separator and contact the second electrode plate and/or the shell.

According to some embodiments of this application, a distance by which the first insulation layer on the inner surface of the first blank foil region protrudes beyond the first edge is $L_3$, and a distance by which the first insulation layer on the outer surface of the first blank foil region protrudes beyond the first edge is $L_4$, satisfying: $0 \leq |L_3 - L_4| \leq 10$ mm. Projections of the separators adjacent to the inner surface and the outer surface of the first blank foil region in a thickness direction of the first blank foil region cover protruding parts of the two first insulation layers beyond the first edge.

In the above technical solution, when the distance by which the first insulation layer on the inner surface of the first blank foil region protrudes beyond the first edge is equal to the distance by which the first insulation layer on the outer surface of the first blank foil region protrudes beyond the first edge, the protruding part of the first insulation layer on the inner surface of the first blank foil region beyond the first edge is just bonded and fixed to the protruding part of the first insulation layer on the outer surface of the first blank foil region beyond the first edge.

When the distance by which the first insulation layer on the inner surface of the first blank foil region protrudes beyond the first edge is different from the distance by which the first insulation layer on the outer surface of the first blank foil region protrudes beyond the first edge, the distance by which the first insulation layer on the inner surface of the first blank foil region protrudes beyond the first edge is greater than the distance by which the first insulation layer on the outer surface of the first blank foil region protrudes beyond the first edge, or, the distance by which the first insulation layer on the inner surface of the first blank foil region protrudes beyond the first edge is less than the distance by which the first insulation layer on the outer surface of the first blank foil region protrudes beyond the first edge. In this case, after the protruding part of the first insulation layer on the inner surface of the first blank foil region beyond the first edge is bonded and fixed to the protruding part of the first insulation layer on the outer surface of the first blank foil region beyond the first edge, one region in the protruding part of the first insulation layer on the inner surface of the first blank foil region beyond the first edge or the protruding part of the first insulation layer on the outer surface of the first blank foil region beyond the first edge is exposed. The exposed region may be bonded and fixed to the separator oriented toward the exposed region, so that the two insulation layers in the first blank foil region can be further bonded and fixed to the separator to improve the connection stability of the two insulation layers.

According to some embodiments of this application, 1 mm $\leq |L_3 - L_4| \leq 5$ mm. In this way, the distances by which the two first insulation layers protrude beyond the first edge are not excessive, thereby alleviating the problem of waste of material. In addition, the difference between the distances by which the two first insulation layers protrude beyond the first edge satisfies the above condition, thereby bonding the two first insulation layers to the separator firmly.

According to some embodiments of this application, a distance by which the first insulation layer on the inner surface of the first blank foil region protrudes beyond the second edge is $L_5$, and a distance by which the first insulation layer on the outer surface of the first blank foil region protrudes beyond the second edge is $L_6$, satisfying: $0 \leq |L_5 - L_6| \leq 10$ mm. Projections of the separators adjacent to the inner surface and the outer surface of the first blank foil region in a thickness direction of the first blank foil region cover protruding parts of the two first insulation layers beyond the second edge.

In the above technical solution, when the distance by which the first insulation layer on the inner surface of the first blank foil region protrudes beyond the second edge is equal to the distance by which the first insulation layer on the outer surface of the first blank foil region protrudes beyond the second edge, the protruding part of the first insulation layer on the inner surface of the first blank foil region beyond the second edge is just bonded and fixed to the protruding part of the first insulation layer on the outer surface of the first blank foil region beyond the second edge.

When the distance by which the first insulation layer on the inner surface of the first blank foil region protrudes beyond the second edge is different from the distance by which the first insulation layer on the outer surface of the first blank foil region protrudes beyond the second edge, the distance by which the first insulation layer on the inner surface of the first blank foil region protrudes beyond the second edge is greater than the distance by which the first insulation layer on the outer surface of the first blank foil region protrudes beyond the second edge, or, the distance by which the first insulation layer on the inner surface of the first blank foil region protrudes beyond the second edge is less than the distance by which the first insulation layer on the outer surface of the first blank foil region protrudes beyond the second edge. In this case, after the protruding part of the first insulation layer on the inner surface of the first blank foil region beyond the second edge is bonded and fixed to the protruding part of the first insulation layer on the outer surface of the first blank foil region beyond the second edge, one region in the protruding part of the first insulation layer on the inner surface of the first blank foil region beyond the second edge or the protruding part of the first insulation layer on the outer surface of the first blank foil region beyond the second edge is exposed. The exposed region may be bonded and fixed to the separator oriented toward the exposed region, so that the two first insulation layers in the first blank foil region can be further bonded and fixed to the separator to improve the connection stability of the two first insulation layers.

According to some embodiments of this application, $1 \text{ mm} \leq |L_5 - L_6| \leq 5 \text{ mm}$. In this way, the distances by which the two insulation layers protrude beyond the second edge are not excessive, thereby alleviating the problem of waste of material. In addition, the difference between the distances by which the two second insulation layers protrude beyond the second edge satisfies the above condition, thereby bonding the two insulation layers to the separator firmly.

According to some embodiments of this application, the bonding layer is an adhesive tape. The adhesive tape includes a substrate layer and a binder layer. The substrate layer is a substrate of the adhesive tape, so that the adhesive tape is of specified strength and toughness. The binder layer possesses an adhesive property. One side of the binder layer may be bonded and fixed to the substrate, and the other side of the binder layer may be bonded and fixed to a part to be bonded.

According to some embodiments of this application, the first insulation layer covers a connecting portion between the first tab and the first blank foil region.

In the above technical solution, the first tab may be welded to the first blank foil region. In this case, many burrs may be generated on the first tab by the welding, and the first insulation layer covers the connecting portion between the first tab and the first blank foil region, thereby reducing the probability that the burrs penetrate the separator and contact the second tab or the shell.

According to some embodiments of this application, the first tab includes a first tab connecting section and a first tab protruding section. The first tab connecting section overlaps with the first blank foil region. The first tab protruding section protrudes beyond the first blank foil region.

Each of the two first insulation layers includes a first insulation layer body and a first extension portion. The two first insulation layer bodies cover the inner surface and the outer surface of the first blank foil region. The two first extension portions are connected to the corresponding first insulation layer bodies and cover a part of an inner surface and a part of an outer surface of the first tab protruding section respectively.

In the above technical solution, the two first extension portions are connected to the corresponding first insulation layer bodies and cover a part of the inner surface and the outer surface of the first tab protruding section respectively. In this way, the two first extension portions may cover a part of the first tab protruding section, thereby reducing the probability that the burrs of the first tab protruding section penetrate the separator and contact the second electrode plate or the housing.

According to some embodiments of this application, a dimension by which the first extension portion protrudes beyond the corresponding first insulation layer body is not greater than 50 mm.

In the above technical solution, in order to ensure direct or indirect connection between the first tab protruding section and a terminal on the housing, the first extension portion needs to avoid fully covering the first tab protruding section. Therefore, in this embodiment of this application, the dimension by which the first extension portion protrudes beyond the corresponding first insulation layer body is defined, thereby protecting the first tab protruding section, reducing the probability that the burrs of the first tab protruding section penetrate the separator and contact the second tab or the housing, and exposing a part of the first tab protruding section to facilitate direct or indirect connection between the first tab protruding section and the terminal of the housing.

According to some embodiments of this application, the second tab includes a second tab connecting section and a second tab protruding section. The second tab connecting section overlaps with the second blank foil region. The second tab protruding section protrudes beyond the second blank foil region.

The first insulation layer on the inner surface of the first blank foil region further includes a second extension portion. The second extension portion is connected to the corresponding first insulation layer body and covers a part of the second tab protruding section.

In the above technical solution, the second extension portion may cover a part of the second tab protruding section, thereby reducing the probability that the burrs of the second tab protruding section penetrate the separator and contact the first electrode plate.

According to some embodiments of this application, a dimension by which the second extension portion protrudes beyond the corresponding first insulation layer body is not greater than 50 mm.

In the above technical solution, in order to ensure direct or indirect connection between the second tab protruding section and a terminal on the housing, the second extension portion needs to avoid fully covering the outer surface of the second tab protruding section. Therefore, in this embodiment of this application, the dimension by which the second extension portion protrudes beyond the first insulation layer body on the inner surface of the first blank foil region is defined, thereby protecting the second tab protruding section, reducing the probability that the burrs of the second tab protruding section penetrate the separator and contact the first tab, and at the same time, exposing a part of the second tab protruding section to facilitate direct or indirect connection between the second tab protruding section and the terminal of the housing.

According to some embodiments of this application, the first insulation layer is configured to be a bonding layer bonded to the inner surface and the outer surface of the first blank foil region; or the first insulation layer is configured to be a coating layer applied onto the inner surface and the outer surface of the first blank foil region.

According to some embodiments of this application, the first insulation layer covers a part of the first active material region. The first insulation layer on the inner surface of the first blank foil region can fully coat the inner surface of the first blank foil region. The first insulation layer on the outer surface of the first blank foil region can fully coat the outer surface of the first blank foil region.

According to some embodiments of this application, the first electrode plate includes a third blank foil region. In the winding direction of the first electrode plate, the first active material region is provided between the first blank foil region and the third blank foil region. The third blank foil region is provided with a second insulation layer.

According to some embodiments of this application, a sum of a length of the first insulation layer in the winding direction of the first electrode plate and a length of the second insulation layer in the winding direction of the first electrode plate is not greater than 100 mm.

In the above technical solution, the length of the first insulation layer is ensured to be enough to protect the first blank foil region, but without causing an excessive length of the first insulation layer that leads to a problem of material waste.

According to some embodiments of this application, the second insulation layer covers a part of the first active material region.

In the above technical solution, the second insulation layer on the inner surface of the third blank foil region can fully coat the inner surface of the third blank foil region. The second insulation layer on the outer surface of the third blank foil region can fully coat the outer surface of the third blank foil region.

According to some embodiments of this application, the first electrode plate is a positive electrode plate, and the second electrode plate is a negative electrode plate.

According to some embodiments of this application, $1.05 \leq L_1/L_2 \leq 1.2$. The stroke of the current on the first electrode plate is substantially the same as the stroke of the current on the second electrode plate, and the magnetic field generated on the first electrode plate can substantially counteract the magnetic field generated on the second electrode plate, thereby reducing the impact caused by the magnetic field generated by the secondary battery onto the electrical device.

According to some embodiments of this application, the secondary battery further includes a shell. The shell is cylindrical, and the electrode assembly is disposed in the shell.

According to a second aspect, an embodiment of this application provides an electrical device. The electrical device includes the secondary battery disclosed above.

Additional aspects and advantages of this application will be partly given in the following description, and a part thereof will become evident in the following description or will be learned in the practice of this application.

## BRIEF DESCRIPTION OF DRAWINGS

To describe technical solutions in some embodiments of this application more clearly, the following outlines the drawings to be used in the embodiments. Understandably, the following drawings show merely some embodiments of this application, and therefore, are not intended to limit the scope. A person of ordinary skill in the art may derive other related drawings from the drawings without making any creative efforts.

FIG. 1 is a schematic diagram of a secondary battery according to a first embodiment of this application;
FIG. 2 is a schematic diagram of a first electrode plate viewed in a width direction according to a first embodiment of this application;
FIG. 3 is a schematic diagram of a second electrode plate viewed in a width direction according to a first embodiment of this application;
FIG. 4 is a schematic diagram of a first electrode plate viewed in a thickness direction according to a first embodiment of this application;
FIG. 5 is a schematic diagram of a first electrode plate viewed in a thickness direction according to a second embodiment of this application;
FIG. 6 is a schematic diagram of a first electrode plate viewed in a thickness direction according to a third embodiment of this application;
FIG. 7 is a schematic diagram of a first electrode plate viewed in a thickness direction according to a fourth embodiment of this application;
FIG. 8 is a schematic diagram of a first electrode plate viewed in a thickness direction according to a fifth embodiment of this application;
FIG. 9 is a schematic diagram of a first electrode plate viewed in a thickness direction according to a sixth embodiment of this application; and
FIG. 10 is a schematic diagram of a secondary battery according to a second embodiment of this application.

List of reference numerals:

    secondary battery 100;
    first electrode plate 111, first active material region 111a, first blank foil region 111b, third blank foil region 111c, first winding start end 101, first edge 103, second edge 104;
    second electrode plate 112, second active material region 112a, second blank foil region 112b, second winding start end 102;
    separator 113;
    first tab 120, first tab connecting section 121, first tab protruding section 122;
    second tab 130, second tab connecting section 131, second tab protruding section 132;
    first insulation layer 140, first insulation layer body 141, first extension portion 142, second extension portion 143;
    second insulation layer 150.

## DETAILED DESCRIPTION

To make the objectives, technical solutions, and advantages of some embodiments of this application clearer, the following gives a clear and complete description of the technical solutions in some embodiments of this application with reference to the drawings in some embodiments of this application. Apparently, the described embodiments are merely a part of but not all of the embodiments of this application. All other embodiments derived by a person of ordinary skill in the art based on the embodiments of this application without making any creative effort fall within the protection scope of this application.

Unless otherwise defined, all technical and scientific terms used herein have the same meanings as what is normally understood by a person skilled in the technical field of this application. The terms used in the specification of this application are merely intended to describe specific embodiments but not intended to limit this application. The terms "include" and "contain" and any variations thereof used in the specification, claims, and brief description of drawings of this application are intended as non-exclusive inclusion. The terms such as "first" and "second" used in the specification, claims, and brief description of drawings herein are intended to distinguish between different items, but are not intended to describe a specific sequence or order of precedence.

Reference to "embodiment" in this application means that a specific feature, structure or characteristic described with reference to the embodiment may be included in at least one embodiment of this application. Reference to this term in different places in the specification does not necessarily represent the same embodiment, nor does it represent an independent or alternative embodiment in a mutually exclusive relationship with other embodiments. A person skilled in the art explicitly and implicitly understands that an embodiment described in this application may be combined with another embodiment.

In the description of this application, unless otherwise expressly specified and defined, the terms "mount", "concatenate", "connect", and "attach" are understood in a broad sense. For example, a "connection" may be a fixed connection, a detachable connection, or an integrated connection; or may be a direct connection or an indirect connection implemented through an intermediary; or may be internal communication between two components. A person of ordinary skill in the art is able to understand the specific meanings of the terms in this application according to specific situations.

The term "and/or" in this application indicates merely a relation for describing the related items, and represents three possible relationships. For example, "A and/or B" may represent the following three circumstances: A alone, both A and B, and B alone. In addition, the character "/" herein generally indicates an "or" relationship between the item preceding the character and the item following the character.

"A plurality of" referred to in this application means two or more (including two). Similarly, "a plurality of groups" means two or more groups (including two groups), and "a plurality of pieces" means two or more pieces (including two pieces).

During the charging and discharging of a jelly-roll battery, the current in a positive electrode plate flows in a direction opposite to the flow direction of the current in a negative electrode plate of the jelly-roll battery. If the magnetic field generated by the positive electrode plate is unable to completely counteract the magnetic field generated by the negative electrode plate, a relatively strong magnetic field may exist, thereby limiting the application scenarios. Currently, in a jelly-roll battery, an annular tab is usually welded to the outside of the battery to achieve the purpose of demagnetization. However, this kind of measure not only increases the production cost and processing difficulty, but also increases the volume of the battery, and reduces the energy density of the battery. In addition, the demagnetization effect is not universally achievable.

Therefore, this application discloses a secondary battery 100. The secondary battery 100 not only achieves an excellent demagnetization effect, but also reduces the probability of short circuits in a battery cell caused by the demagnetization structure.

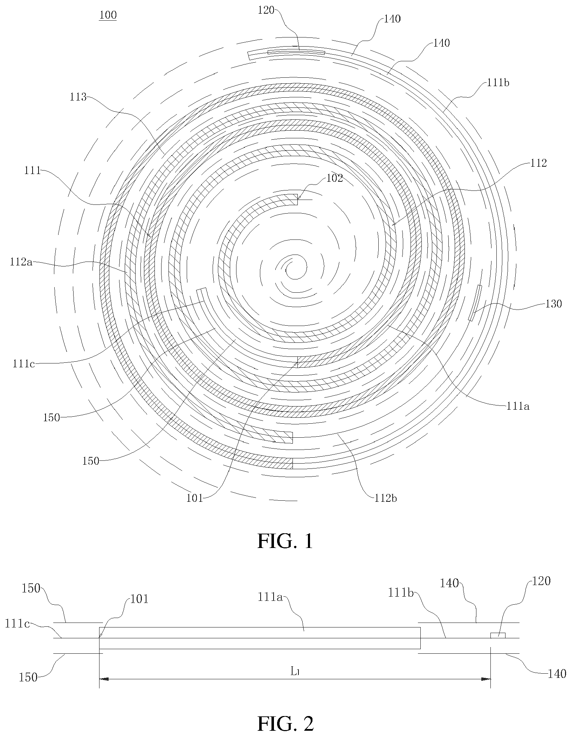

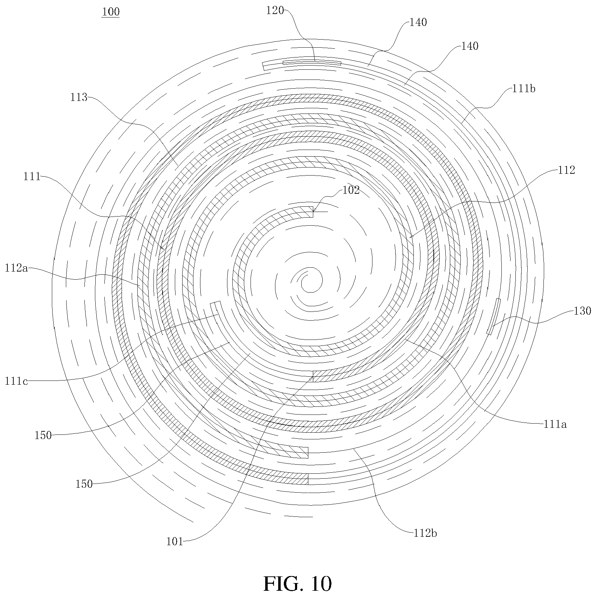

As shown in FIG. 1 and FIG. 10, the secondary battery 100 according to an embodiment of this application may include an electrode assembly. The electrode assembly includes a first electrode plate 111, a second electrode plate 112, and a separator 113. The separator 113 is provided between the first electrode plate 111 and the second electrode plate 112. The first electrode plate 111 includes a first active material region 111a. The first active material region 111a includes a first winding start end 101. The second electrode plate 112 includes a second active material region 112a. The second active material region 112a includes a second winding start end 102.

The secondary battery 100 means a battery cell that is reusable through activation of an active material in the battery cell by charging the battery cell that has been discharged.

The secondary battery 100 may be, but is not limited to, a lithium-ion battery, a sodium-ion battery, a sodium-lithium-ion battery, a lithium metal battery, a sodium metal battery, a lithium-sulfur battery, a magnesium-ion battery, a nickel-hydrogen battery, a nickel-cadmium battery, a lead storage battery, or the like.

Generally, a secondary battery 100 includes an electrode assembly. The electrode assembly includes a positive electrode, a negative electrode, and a separator 113. In an embodiment of this application, one of the first electrode plate 111 and the second electrode plate 112 is a positive electrode, and the other of the first electrode plate 111 and the second electrode plate 112 is a negative electrode. During charging and discharging of the secondary battery 100, active ions (such as lithium ions) are shuttled between the positive electrode and the negative electrode by intercalation and deintercalation. Provided between the positive electrode and the negative electrode, the separator 113 serves to prevent a short circuit between the positive electrode and the negative electrode and allow passage of the active ions.

In an embodiment of this application, the first active material region 111a is a part of the first electrode plate 111, the part being coated with an active material. The second active material region 112a is a part of the second electrode plate 112, the part being coated with an active material. At least one surface of the current collector in the first active material region 111a is coated with an active material, and at least one surface of the current collector in the second active material region 112a is coated with an active material.

The first winding start end 101 in this embodiment of this application is an end portion closest to a start end of the first electrode plate 111 in the first active material region 111a. If the start end of the first electrode plate 111 is also coated with an active material, the first winding start end 101 is the start end of the first electrode plate 111. Similarly, the second winding start end 102 in this embodiment of this application is an end portion closest to a start end of the second electrode plate 112 in the second active material region 112a. If the start end of the second electrode plate 112 is also coated with an active material, the second winding start end 102 is the start end of the second electrode plate 112.

In some embodiments, the positive electrode may be a positive electrode plate. The positive electrode plate may include a positive current collector and a positive active material provided on at least one surface of the positive current collector.

As an example, the positive current collector includes two surfaces opposite to each other in a thickness direction of the current collector. The positive active material is disposed on any one or both of the two opposite surfaces of the positive current collector.

As an example, the positive current collector may be metal foil or a composite current collector. For example, the metal foil may be made of silver-plated aluminum, silver-plated stainless steel, stainless steel, copper, aluminum, nickel, carbon electrode, carbon, nickel, titanium, or the like. The composite current collector may include a polymer material substrate and a metal layer. The composite current collector may be formed by overlaying the polymer material substrate with a metal material (for example, aluminum, aluminum alloy, nickel, nickel alloy, titanium, titanium alloy, silver, and silver alloy). The polymer material substrate may be, for example, polypropylene, polyethylene terephthalate, polybutylene terephthalate, polystyrene, or polyethylene.

As an example, the positive active material may include at least one of the following materials: lithium-containing phosphate, lithium transition metal oxide, and a modified compound thereof. However, this application is not limited to such materials, and other conventional materials usable as a positive active material of a battery may be used instead.

In some embodiments, the negative electrode may be a negative electrode plate. The negative electrode plate may include a negative current collector.

As an example, the negative current collector may be metal foil or a composite current collector. For example, the metal foil may be made of silver-plated aluminum, silver-plated stainless steel, stainless steel, copper, aluminum, nickel, titanium, or the like.

In some embodiments, the negative current collector includes two surfaces opposite to each other in a thickness direction of the electrode plate. The negative active material is disposed on either or both of the two opposite surfaces of the negative current collector.

As an example, the negative active material may be a negative active material known for use in a battery in the art. As an example, the negative active material may include at least one of the following materials: artificial graphite, natural graphite, soft carbon, hard carbon, silicon-based material, tin-based material, lithium titanium oxide, and the like. The silicon-based material may be at least one selected from elemental silicon, a silicon-oxygen compound, a silicon-carbon composite, a silicon-nitrogen composite, and a silicon alloy. The tin-based material may be at least one selected from elemental tin, a tin-oxygen compound, or a tin alloy. However, this application is not limited to such materials, and other conventional materials usable as a negative active material of a battery may be used instead. One of the negative active materials may be used alone, or at least two thereof may be used in combination.

The type of the separator 113 is not particularly limited in this application, and may be any well-known porous separator 113 that is highly stable both chemically and mechanically.

As an example, the separator 113 may be mainly made of a material that is at least one selected from glass fiber, non-woven fabric, polyethylene, polypropylene, polyvinylidene difluoride, or ceramics. The separator 113 may be a single-layer film or a multilayer composite film, without being particularly limited. When the separator 113 is a multilayer composite film, materials in different layers may be identical or different, without being particularly limited. The separator 113 may be a separate component located between the positive electrode and the negative electrode, or may be attached to a surface of the positive or negative electrode.

In some embodiments, the separator 113 is a solid-state electrolyte. The solid-state electrolyte is disposed between the positive electrode and the negative electrode, and serves functions of transmitting ions and isolating the positive electrode from the negative electrode at the same time.

In some embodiments of this application, the secondary battery 100 further includes a first tab 120 and a second tab 130. The first tab 120 is electrically connected to the first electrode plate 111. The first tab 120 can connect the first electrode plate 111 to a first terminal on the housing, and the second tab 130 can connect the second electrode plate 112 to a second terminal on the housing. The first tab 120 and the first electrode plate 111 may be formed in one piece. The second tab 130 and the second electrode plate 112 may be formed in one piece. Alternatively, the first tab 120 may be welded to the first electrode plate 111, and the second tab 130 may be welded to the second electrode plate 112. This application does not limit the manner of connection between the first tab 120 and the first electrode plate 111 or the manner of connection between the second tab 130 and the second electrode plate 112.

In some embodiments, the secondary battery 100 may include a shell. The shell is configured to package components such as the electrode assembly and the electrolyte. The shell may be a steel shell, an aluminum shell, a plastic shell (for example, polypropylene), a composite metal shell (for example, a copper-aluminum composite shell), or an aluminum laminated film.

In some embodiments, the shell includes an end cap and a housing. The housing includes an opening, and the end cap closes the opening to form a hermetic space configured to accommodate the electrode assembly and other substances such as electrolyte. The housing may include one or more openings, and may include one or more end caps.

In some embodiments, at least one terminal is disposed on the shell. The terminal is electrically connected to a tab of the electrode assembly. The terminal may be connected to the tab directly, or in an indirect manner through an adapter piece. The terminal may be disposed on the end cap or on the housing.

In some embodiments, an explosion-proof valve is disposed on the shell. The explosion-proof valve is configured to release an internal pressure of the battery cell.

In some embodiments of this application, as shown in FIG. 1 to FIG. 3 together with FIG. 10, the electrode assembly is a jelly-roll structure. Along a winding direction of the electrode assembly, a distance between the first winding start end 101 and the first tab 120 is $L_1$, and a distance between the second winding start end 102 and the second tab 130 is $L_2$, satisfying: $0.8 \leq L_1/L_2 \leq 1.2$.

The width of the first tab 120 extends in the winding direction of the first electrode plate 111, and the width of the second tab 130 extends in the winding direction of the second electrode plate 112. In an embodiment of this application, $L_1$ is a distance between the first winding start end 101 and an edge close to the first active material region 111a on the first tab 120. $L_2$ is a distance between the second winding start end 102 and an edge close to the second active material region 112a on the second tab 130.

During charging and discharging the secondary battery 100, a delithiation or lithiation reaction occurs between the first active material region 111a and the second active material region 112a. Correspondingly, as long as the first tab 111 and the second tab 112 are coated with an active material, electrons move inevitably. Electrons move on the current collector in the first active material region 111a and the current collector between the first active material region 111a and the first tab 120, thereby forming a current. Electrons also move on the current collector in the second active material region 112a and the current collector between the first active material region 111a and the second tab 130, thereby forming a current. The flow direction of the current on the current collector of the first electrode plate 111 is opposite to the flow direction of the current on the current collector of the second electrode plate 112.

The distance between the first winding start end 101 and the first tab 120 is a stroke of the current of the first electrode plate 111, and the distance between the second winding start end 102 and the second tab 130 is a stroke of the current of the second electrode plate 112.

In the prior art, the stroke of the current on the first electrode plate 111 is sharply different from the stroke of the current on the second electrode plate 112, so that the magnetic field generated on the first electrode plate 111 is unable to completely counteract the magnetic field generated on the second electrode plate 112, thereby possibly causing intense interference to an electrical device in some application scenarios, for example, interference caused by a large cylindrical battery to a circuit board, and electrical current noise interference caused by a small jelly-roll battery to a Bluetooth headset speaker.

In an embodiment of this application, a distance between the first winding start end 101 and the first tab 120 is $L_1$, and a distance between the second winding start end 102 and the second tab 130 is $L_2$, satisfying: $0.8 \leq L_1/L_2 \leq 1.2$.

In other words, the stroke of the current on the first electrode plate 111 is substantially the same as the stroke of the current on the second electrode plate 112, and the magnetic field generated on the first electrode plate 111 can substantially counteract the magnetic field generated on the second electrode plate 112, thereby reducing the impact caused by the non-counteracted magnetic field onto the electrical device, and in turn, improving the user experience.

In some embodiments of this application, as shown in FIG. 1 to FIG. 2 and FIG. 6 to FIG. 7, the first electrode plate 111 includes a first blank foil region 111b. The first blank foil region 111b is configured to be an end section of the first electrode plate 111. The second electrode plate 112 includes a second blank foil region 112b. The second blank foil region 112b is configured to be an end section of the second electrode plate 112.

It is hereby noted that neither surface of the first blank foil region 111b in the thickness direction is coated with an active material, and neither surface of the second blank foil region 112b in the thickness direction is coated with an active material. The first blank foil region 111b is a part, close to the end section, of the first electrode plate 111; and the second blank foil region 112b is a part, close to the end section, of the second electrode plate 112.

In some embodiments of this application, as shown in FIG. 1 to FIG. 2, the first tab 120 is connected to the first blank foil region 111b, and the second tab 130 is connected to the second blank foil region 112b. A first insulation layer 140 is further disposed in the first blank foil region 111b. The stroke of the current on the first electrode plate 111 is substantially the same as the stroke of the current on the second electrode plate 112. In this way, the magnetic field generated on the first electrode plate 111 can substantially counteract the magnetic field generated on the second electrode plate 112, thereby reducing the impact caused by the magnetic field generated by the secondary battery 100 onto the electrical device. In addition, the first insulation layer 140 is disposed in the first blank foil region 111b, which means that the first insulation layer 140 is disposed in the end section of the first electrode plate 111. In this way, the first insulation layer 140 can, on the one hand, wrap the burrs on the first electrode plate 111, thereby reducing the probability that the burrs penetrate the separator 113 and contact the shell. On the other hand, the above arrangement reduces the probability that the burrs on the first electrode plate 111 penetrate the separator 113 and contact the second electrode plate 112 to cause a short circuit between the positive electrode and the negative electrode. Further, because the stroke of the current on the first electrode plate 111 is substantially the same as the stroke of the current on the second electrode plate 112, the first tab 120 and the second tab 130 can be spaced apart in the winding direction of the electrode assembly, and the first insulation layer 140 can cover the first tab 120, thereby reducing the probability that the burrs on the first tab 120 penetrate the separator 113 and contact the second electrode plate 112 or the shell.

In some embodiments of this application, as shown in FIG. 2, both the inner surface and the outer surface of the first blank foil region 111b are coated with the first insulation layer 140. The inner surface and the outer surface of the first blank foil region 111b are two surfaces of the first blank foil region 111b in the thickness direction. The inner surface of the first blank foil region 111b is closer to the winding center of the electrode assembly than the outer surface of the first blank foil region 111b.

If the electrode assembly ends with the first blank foil region 111b, the first insulation layer 140 on the outer surface of the first blank foil region 111b can reduce the probability that the burrs on the first blank foil region 111b penetrate the separator 113 and the shell. The first insulation layer 140 on the inner surface of the first blank foil region 111b can isolate the first blank foil region 111b from the second blank foil region 112b, thereby reducing the probability that the burrs in the first blank foil region 111b penetrate the separator 113 and contact the second electrode plate 112.

If the electrode assembly ends with the second blank foil region 112b, the first insulation layer 140 on the outer surface of the first blank foil region 111b can reduce the probability that the burrs on the first blank foil region 111b penetrate the separator 113 and contact the second blank foil region 112b. The first insulation layer 140 on the inner surface of the first blank foil region 111b can isolate the first blank foil region 111b from an inner second electrode plate 112 that is immediately more inward than the first blank foil region, thereby reducing the probability that the burrs in the first blank foil region 111b penetrate the separator 113 and contact the second electrode plate 112.

In some embodiments of this application, the first insulation layer 140 is configured to be a bonding layer, and the first insulation layers 140 are bonded and fixed to both the inner surface and the outer surface of the first blank foil region 111b. In the width direction of the first electrode plate 111, the first electrode plate 111 includes a first edge 103 and a second edge 104. The first insulation layer 140 on the inner surface of the first blank foil region 111b extends beyond the first edge 103 and the second edge 104 separately at the two ends of the first electrode plate 111 in the width direction. The first insulation layer 140 on the outer surface of the first blank foil region 111b extends beyond the first edge 103 and the second edge 104 separately at the two ends of the first electrode plate 111 in the width direction.

In some embodiments of this application, the bonding layer is an adhesive tape. The adhesive tape includes a substrate layer and a binder layer. The substrate layer is a substrate of the adhesive tape, so that the adhesive tape is of specified strength and toughness. The binder layer possesses an adhesive property. One side of the binder layer may be bonded and fixed to the substrate, and the other side of the binder layer may be bonded and fixed to a part to be bonded.

In this way, the inner surface and the outer surface of the first blank foil region 111b are both coated by two first insulation layers 140. Moreover, the protruding part of the first insulation layer 140 on the inner surface of the first blank foil region 111b beyond the first edge 103 can be bonded to the protruding part of the first insulation layer 140 on the outer surface of the first blank foil region 111b beyond the first edge 103, so that the first edge 103 of the first blank foil region 111b can also be coated by two first insulation layers 140. The protruding part of the first insulation layer 140 on the inner surface of the first blank foil region 111b beyond the second edge 104 can be bonded to the protruding part of the first insulation layer 140 on the outer surface of the first blank foil region 111b beyond the second edge 104, so that the second edge 104 of the first blank foil region 111b can also be coated by two first insulation layers 140.

In some embodiments of this application, one side of the first insulation layer 140 on the inner surface of the first blank foil region 111b is oriented toward one side of the first insulation layer 140 on the outer surface of the first blank foil region 111b, and the two sides oriented toward each other are bonding sides. In this way, one first insulation layer 140 can be bonded to the inner surface of the first blank foil region 111b, and the other first insulation layer 140 can be bonded to the outer surface of the first blank foil region 111b. In addition, because the sides of the two first insulation layers 140, which are oriented toward each other, are configured to be bonding sides, the protruding parts of the two first insulation layers 140 beyond the first edge 103 can be bonded and fixed together, and the protruding parts of the two first insulation layers 140 beyond the second edge 104 can also be bonded and fixed together, thereby more comprehensively protecting the first blank foil region 111b, and reducing the probability that the burrs in the first blank foil region 111b penetrate the separator 113 and contact the second electrode plate 112 and/or the shell.

In this application, on the first insulation layer 140 on the inner surface of the first blank foil region 111b, only one side of the first insulation layer 140, which is oriented toward the outer surface of the first blank foil region 111b, is configured to be a bonding side. On the first insulation layer 140 on the outer surface of the first blank foil region 111b, only one side of the first insulation layer 140, which is oriented toward the inner surface of the first blank foil region 111b, is configured to be a bonding side. On the first insulation layer 140 on the inner surface of the first blank foil region 111b, one side of the first insulation layer 140, which is oriented away from the outer surface of the first blank foil region 111b, is not configured to be a bonding side. On the first insulation layer 140 on the outer surface of the first blank foil region 111b, one side of the first insulation layer 140, which is oriented away from the inner surface of the first blank foil region 111b, is not configured to be a bonding side. This not only reduces the cost of the first insulation layer 140, but also reduces the probability of a large area of bonding the two first insulation layers 140 to the separator 113, thereby reducing the probability of wrinkling of the separator 113 during winding of the electrode assembly.

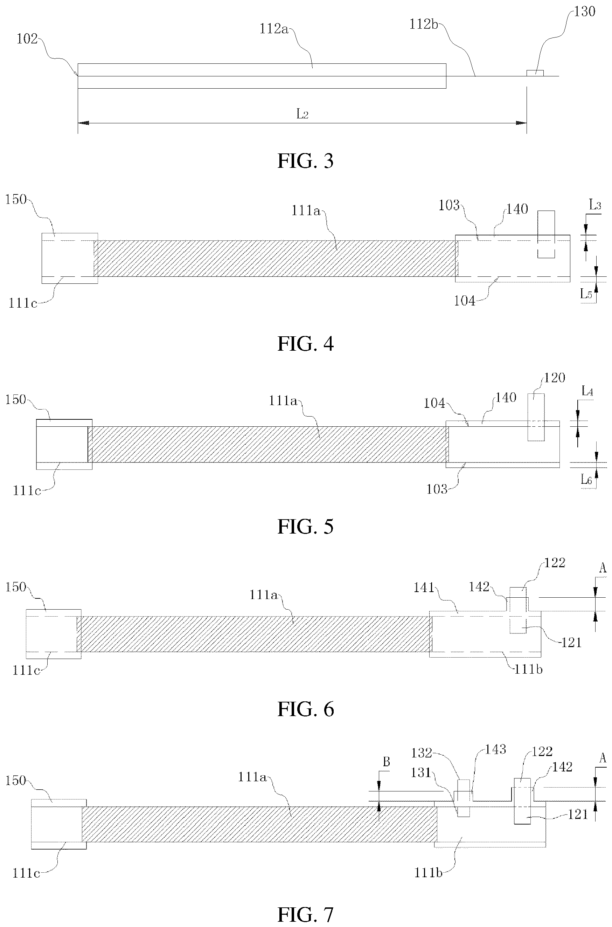

In some embodiments of this application, as shown in FIG. 4, a distance by which the first insulation layer 140 on the inner surface of the first blank foil region 111b protrudes beyond the first edge 103 is $L_3$, and a distance by which the first insulation layer 140 on the outer surface of the first blank foil region 111b protrudes beyond the first edge 103 is $L_4$, satisfying: $0 \leq |L_3 - L_4| \leq 10$ mm. Projections of the separators 113 on an inner surface and an outer surface of the first blank foil region 111b in a thickness direction of the first blank foil region 111b cover protruding parts of the two first insulation layers 140 beyond the first edge 103.

When the distance by which the first insulation layer 140 on the inner surface of the first blank foil region 111b protrudes beyond the first edge 103 is equal to the distance by which the first insulation layer 140 on the outer surface of the first blank foil region 111b protrudes beyond the first edge 103, the protruding part of the first insulation layer 140 on the inner surface of the first blank foil region 111b beyond the first edge 103 is just bonded and fixed to the protruding part of the first insulation layer 140 on the outer surface of the first blank foil region 111b beyond the first edge 103.

When the distance by which the first insulation layer 140 on the inner surface of the first blank foil region 111b protrudes beyond the first edge 103 is different from the distance by which the first insulation layer 140 on the outer surface of the first blank foil region 111b protrudes beyond the first edge 103, the distance by which the first insulation layer 140 on the inner surface of the first blank foil region 111b protrudes beyond the first edge 103 is greater than the distance by which the first insulation layer 140 on the outer surface of the first blank foil region 111b protrudes beyond the first edge 103, or, the distance by which the first insulation layer 140 on the inner surface of the first blank foil region 111b protrudes beyond the first edge 103 is less than the distance by which the first insulation layer 140 on the outer surface of the first blank foil region 111b protrudes beyond the first edge 103. In this case, after the protruding part of the first insulation layer 140 on the inner surface of the first blank foil region 111b beyond the first edge 103 is bonded and fixed to the protruding part of the first insulation layer 140 on the outer surface of the first blank foil region 111b beyond the first edge 103, one region in the protruding part of the first insulation layer 140 on the inner surface of the first blank foil region 111b beyond the first edge 103 or the protruding part of the first insulation layer 140 on the outer surface of the first blank foil region 111b beyond the first edge 103 is exposed. The exposed region may be bonded and fixed to the separator 113 oriented toward the exposed region, so that the two first insulation layers 140 in the first blank foil region 111b can be further bonded and fixed to the separator 113 to improve the connection stability of the two first insulation layers 140.

In some embodiments of this application, the distance $L_3$ by which the first insulation layer 140 on the inner surface of the first blank foil region 111b protrudes beyond the first edge 103 and the distance $L_4$ by which the first insulation layer 140 on the outer surface of the first blank foil region 111b protrudes beyond the first edge 103 satisfy: $0 \leq |L_3 - L_4| \leq 10$ mm. In this way, the protruding parts of the two first insulation layers 140 beyond the first edge 103 are bonded and fixed together. In addition, when the distance by which the first insulation layer 140 on the inner surface of the first blank foil region 111b protrudes beyond the first edge 103 is different from the distance by which the first insulation layer 140 on the outer surface of the first blank foil region 111b protrudes beyond the first edge 103, the two first insulation layers 140 can be bonded and fixed to the separator 113, thereby improving the connection stability of the two first insulation layers 140. In addition, the absolute value of the difference between the distance by which the first insulation layer 140 on the inner surface of the first blank foil region 111b protrudes beyond the first edge 103 and the distance by which the first insulation layer 140 on the outer surface of the first blank foil region 111b protrudes beyond the first edge 103 is controlled to be not greater than 10 mm, thereby alleviating the problem that the energy density of the secondary battery 100 is reduced due to an excessive width of the two first insulation layers 140.

For example, $|L_3-L_4|$ may be 0 mm, 2 mm, 4 mm, 6 mm, 8 mm, or 10 mm. The value of $|L_3-L_4|$ is not particularly limited herein, as long as $|L_3-L_4|$ satisfies the above relation.

In some embodiments of this application, 1 mm $\leq |L_3 - L_4| \leq 5$ mm. In this way, the distances by which the two first insulation layers 140 on the inner surface and the outer surface of the first blank foil region 111b protrude beyond the first edge 103 are not excessive, thereby alleviating the problem of waste of material. In addition, the difference between the distances by which the two first insulation layers 140 protrude beyond the first edge 103 satisfies the above condition, thereby bonding the two first insulation layers 140 to the separator 113 firmly. For example, $|L_3-L_4|$ may be 1 mm, 2 mm, 3 mm, 4 mm, or 5 mm. The value of $|L_3-L_4|$ is not particularly limited herein, as long as $|L_3-L_4|$ satisfies the above relation.

In some embodiments of this application, as shown in FIG. 5, a distance by which the first insulation layer 140 on the inner surface of the first blank foil region 111b protrudes beyond the second edge 104 is $L_5$, and a distance by which the first insulation layer 140 on the outer surface of the first blank foil region 111b protrudes beyond the second edge 104 is $L_6$, satisfying: $0 \leq |L_5 - L_6| \leq 10$ mm. Projections of the separators 113 on the inner surface and the outer surface of the first blank foil region 111b in a thickness direction of the first blank foil region 111b cover protruding parts of the two first insulation layers 140 beyond the second edge 104.

When the distance by which the first insulation layer 140 on the inner surface of the first blank foil region 111b protrudes beyond the second edge 104 is equal to the distance by which the first insulation layer 140 on the outer surface of the first blank foil region 111b protrudes beyond the second edge 104, the protruding part of the first insulation layer 140 on the inner surface of the first blank foil region 111b beyond the second edge 104 is just bonded and fixed to the protruding part of the first insulation layer 140 on the outer surface of the first blank foil region 111b beyond the second edge 104.

When the distance by which the first insulation layer 140 on the inner surface of the first blank foil region 111b protrudes beyond the second edge 104 is different from the distance by which the first insulation layer 140 on the outer surface of the first blank foil region 111b protrudes beyond the second edge 104, the distance by which the first insulation layer 140 on the inner surface of the first blank foil region 111b protrudes beyond the second edge 104 is greater than the distance by which the first insulation layer 140 on the outer surface of the first blank foil region 111b protrudes beyond the second edge 104, or, the distance by which the first insulation layer 140 on the inner surface of the first blank foil region 111b protrudes beyond the second edge 104 is less than the distance by which the first insulation layer 140 on the outer surface of the first blank foil region 111b protrudes beyond the second edge 104. In this case, after the protruding part of the first insulation layer 140 on the inner surface of the first blank foil region 111b beyond the second edge 104 is bonded and fixed to the protruding part of the first insulation layer 140 on the outer surface of the first blank foil region 111b beyond the second edge 104, one region in the protruding part of the first insulation layer 140 on the inner surface of the first blank foil region 111b beyond the second edge 104 or the protruding part of the first insulation layer 140 on the outer surface of the first blank foil region 111b beyond the second edge 104 is exposed. The exposed region may be bonded and fixed to the separator 113 oriented toward the exposed region, so that the two first insulation layers 140 in the first blank foil region 111b can be further bonded and fixed to the separator 113 to improve the connection stability of the two first insulation layers 140.

In some embodiments of this application, the distance Ls by which the first insulation layer 140 on the inner surface of the first blank foil region 111b protrudes beyond the second edge 104 and the distance $L_6$ by which the first insulation layer 140 on the outer surface of the first blank foil region 111b protrudes beyond the second edge 104 satisfy: $0 \leq |Ls - L_6| \leq 10$ mm. In this way, the protruding parts of the two first insulation layers 140 beyond the second edge 104 are bonded and fixed together. In addition, when the distance by which the first insulation layer 140 on the inner surface of the first blank foil region 111b protrudes beyond the second edge 104 is different from the distance by which the first insulation layer 140 on the outer surface of the first blank foil region 111b protrudes beyond the second edge 104, the two first insulation layers 140 can be bonded and fixed to the separator 113, thereby improving the connection stability of the two first insulation layers 140. In addition, the absolute value of the difference between the distance by which the first insulation layer 140 on the inner surface of the first blank foil region 111b protrudes beyond the second edge 104 and the distance by which the first insulation layer 140 on the outer surface of the first blank foil region 111b protrudes beyond the second edge 104 is controlled to be not greater than 10 mm, thereby alleviating the problem that the energy density of the secondary battery 100 is reduced due to an excessive width of the two first insulation layers 140.

For example, $|L_5\text{-}L_6|$ may be 0 mm, 2 mm, 4 mm, 6 mm, 8 mm, or 10 mm. The value of $|L_5\text{-}L_6|$ is not particularly limited herein, as long as $|L_5\text{-}L_6|$ satisfies the above relation.

The two first insulation layers 140 may protrude beyond one edge of the first electrode plate 111 on only one side in the width direction, and the dimension of the protruding part beyond the first edge 103 varies between the two first insulation layers. For example, the two first insulation layers 140 may protrude beyond the first edge 103 of the first electrode plate 111 on only one side, or the two first insulation layers 140 may protrude beyond the second edge 104 of the first electrode plate 111 on only one side. The protruding parts of the two first insulation layers 140 beyond the first edge 103 vary in width, or the protruding parts of the two first insulation layers 140 beyond the second edge 104 vary in width.

One side of the two first insulation layers 140 may protrude beyond the edge of the first electrode plate 111 on one side in the width direction, and the other side of the two first insulation layers 140 may protrude beyond the edge of the first electrode plate 111 on the other side in the width direction. In addition, the protruding parts of the two first insulation layers 140 beyond the edge of the first electrode plate 111 on one side vary in width, and the protruding parts of the two first insulation layers 140 beyond the edge of the first electrode plate 111 on the other side in the width direction vary in width.

In this way, the two first insulation layers 140 can be bonded and fixed together on one side of the first electrode plate 111 in the same width direction, and the two first insulation layers 140 can also be bonded and fixed together on the other side of the first electrode plate 111 in the same width direction. In addition, the staggered parts of the two first insulation layers 140 on one side of the first electrode plate 111 in the same width direction can be bonded to the separator 113, and the staggered parts of the two first insulation layers 140 on the other side of the first electrode plate 111 in the same width direction can also be bonded to the separator 113.

In some embodiments of this application, 1 mm ≤ ILs - L_6| ≤ 5 mm. In this way, the distances by which the two first insulation layers 140 on the inner surface and the outer surface of the first blank foil region 111b protrude beyond the second edge 104 are not excessive, thereby alleviating the problem of waste of material. In addition, the difference between the distances by which the two first insulation layers 140 protrude beyond the second edge 104 satisfies the above condition, thereby bonding the two first insulation layers 140 to the separator 113 firmly. For example, $|L_5\text{-}L_6|$ may be 1 mm, 2 mm, 3 mm, 4 mm, or 5 mm. The value of $|L_5\text{-}L_6|$ is not particularly limited herein, as long as $|L_5\text{-}L_6|$ satisfies the above relation.

According to some embodiments of this application, as shown in FIG. 6 to FIG. 7, the first insulation layer 140 covers a connecting portion between the first tab 120 and the first blank foil region 111b. The first tab 120 may be welded to the first blank foil region 111b. In this case, many burrs may be generated on the first tab 120 by the welding, and the first insulation layer 140 covers the connecting portion between the first tab 120 and the first blank foil region 111b, thereby reducing the probability that the burrs penetrate the separator 113 and contact the second tab 130 or the shell.

According to some embodiments of this application, as shown in FIG. 6 to FIG. 7, the first tab 120 includes a first tab connecting section 121 and a first tab protruding section 122. The first tab connecting section 121 overlaps the first blank foil region 111b. The first tab protruding section 122 protrudes beyond the first blank foil region 111b.

The first tab connecting section 121 may be welded to the first blank foil region 111b. The first tab protruding section 122 protrudes beyond the first blank foil region 111b. Understandably, the first tab protruding section 122 may protrude outward along the width direction of the first electrode plate 111, and the protruding direction of the first tab protruding section 122 may be perpendicular to the length direction of the first electrode plate 111.

Each of the two first insulation layers 140 includes a first insulation layer body 141 and a first extension portion 142. The two first insulation layer bodies 141 cover the inner surface and the outer surface of the first blank foil region 111b, and can also cover the first tab connecting portion 121. In this way, the two first insulation layer bodies 141 can cover the inner surface and outer surface of the first blank foil region 111b, thereby reducing the probability that the burrs in the first blank foil region 111b and at the connecting portion between the first blank foil region 111b and the first tab 120 penetrate the separator 113 and contact the second electrode plate 112 or the housing.

The two first extension portions 142 are connected to the corresponding first insulation layer bodies 141 and cover a part of the inner surface and the outer surface of the first tab protruding section 122 respectively. In this way, the two first extension portions 142 may cover a part of the first tab protruding section 122, thereby reducing the probability that the burrs of the first tab protruding section 122 penetrate the separator 113 and contact the second electrode plate 112 or the housing.

It is hereby noted that the two first insulation layers 140 are the first insulation layers 140 on the inner surface and the outer surface of the first blank foil region 111b. Each first insulation layer 140 includes a first insulation layer body 141 and a first extension portion 142 connected to the first insulation layer body 141.

In some embodiments of this application, as shown in FIG. 6 to FIG. 7, a dimension A by which the first extension portion 142 protrudes beyond a corresponding first insulation layer body 141 is not greater than 50 mm. In order to ensure direct or indirect connection between the first tab protruding section 122 and a terminal on the housing, the first extension portion 142 needs to avoid fully covering the first tab protruding section 122. Therefore, in this embodiment of this application, the dimension by which the first extension portion 142 protrudes beyond the corresponding first insulation layer body 141 is controlled to be not greater than 50 mm, thereby protecting the first tab protruding section 122, reducing the probability that the burrs of the first tab protruding section 122 penetrate the separator 113 and contact the second tab 130 or the housing, and exposing a part of the first tab protruding section 122 to facilitate direct or indirect connection between the first tab protruding section 122 and the terminal of the housing.

For example, the dimension by which the first extension portion 142 protrudes beyond the corresponding first insulation layer body 141 may be 10 mm, 20 mm, 30 mm, 40 mm, or 50 mm. The dimension by which the first extension portion 142 protrudes beyond the corresponding first insulation layer body 141 is not limited herein, as long as the dimension by which the first extension portion 142 protrudes beyond the corresponding first insulation layer body 141 falls within the above range.

According to some embodiments of this application, as shown in FIG. 7, the second tab 130 includes a second tab connecting section 131 and a second tab protruding section 132. The second tab connecting section 131 overlaps the second blank foil region 112b. The second tab protruding section 132 protrudes beyond the second blank foil region 112b.

The second tab connecting section 131 may be welded to the second blank foil region 112b. The second tab protruding section 132 protrudes beyond the second blank foil region 112b. Understandably, the second tab protruding section 132 may protrude outward along the width direction of the second electrode plate 112, and the protruding direction of the second tab protruding section 132 may be perpendicular to the length direction of the second electrode plate 112.

The first insulation layer 140 on the inner surface of the first blank foil region 111b further includes a second extension portion 143. The second extension portion 143 is connected to the first insulation layer body 141 on the inner surface of the first blank foil region 111b and covers a part of the second tab protruding section 132. The second extension portion 143 may cover a part of the outer surface of the second tab protruding section 132.

In this way, the second extension portion 143 may cover a part of the second tab protruding section 132, thereby reducing the probability that the burrs of the second tab protruding section 132 penetrate the separator 113 and contact the first electrode plate 111.

In some embodiments of this application, as shown in FIG. 7, a dimension B by which the second extension portion 143 protrudes beyond the first insulation layer body 141 on the inner surface of the first blank foil region 111b is not greater than 50 mm. In order to ensure direct or indirect connection between the second tab protruding section 132 and a terminal on the housing, the second extension portion 143 needs to avoid fully covering the outer surface of the second tab protruding section 132. Therefore, in this embodiment of this application, the dimension by which the second extension portion 143 protrudes beyond the first insulation layer body 141 on the inner surface of the first blank foil region 111b is defined, thereby protecting the second tab protruding section 132, reducing the probability that the burrs of the second tab protruding section 132 penetrate the separator 113 and contact the first tab 120, and at the same time, exposing a part of the second tab protruding section 132 to facilitate direct or indirect connection between the second tab protruding section 132 and the terminal of the housing.

For example, the dimension by which the second extension portion 143 protrudes beyond the first insulation layer body 141 on the inner surface of the first blank foil region 111b may be 10 mm, 20 mm, 30 mm, 40 mm, or 50 mm. The dimension by which the second extension portion 143 protrudes beyond the first insulation layer body 141 on the inner surface of the first blank foil region 111b is not limited herein, as long as the dimension by which the second extension portion 143 protrudes beyond the first insulation layer body 141 on the inner surface of the first blank foil region 111b falls within the above range.

FIG. 4 is a schematic diagram of a first electrode plate 111 as well as a first insulation layer 140 and a second insulation layer 150 on an outer surface of the first electrode plate 111. The first insulation layer 140 on the outer surface of the first blank foil region 111b blocks out the first edge 103, the second edge 104, and a part of the first tab 120. Therefore, the first edge 103, the second edge 104, and the edge of the blocked first tab 120 are indicated by dashed lines. The third insulation layer 150 on the outer surface of the third blank foil region 111c blocks out the third blank foil region 111c. Therefore, the edge of the blocked third blank foil region 111c is indicated by a dashed line.

FIG. 5 is a schematic diagram of a first electrode plate 111 as well as a first insulation layer 140 and a second insulation layer 150 on an inner surface of the first electrode plate 111. The first tab 120 blocks out a part of the first insulation layer 140 on the inner surface of the first blank foil region 111b. Therefore, the edge of the blocked first insulation layer 140 on the inner surface of the first blank foil region 111b is indicated by a dashed line.

FIG. 6 is a schematic diagram of a first electrode plate 111 as well as a first insulation layer 140 and a second insulation layer 150 on an outer surface of the first electrode plate 111. The first insulation layer body 141 on the outer surface of the first blank foil region 111b blocks out the first blank foil region 111b, the first tab connecting section 121, and a part of the first tab protruding section 122. The first extension portion 142 blocks out a part of the first tab protruding section 122. The second insulation layer 150 blocks out the third blank foil region 111c. Therefore, the edge of the blocked first blank foil region 111b, the edge of the blocked first tab 120, and the edge of the blocked third blank foil region 111c are indicated by dashed lines.

FIG. 7 is a schematic diagram of a first electrode plate 111 as well as a first insulation layer 140 and a second insulation layer 150 on an inner surface of the first electrode plate 111. The second tab 130 is located inside the first insulation layer 140 on the inner surface of the first blank foil region 111b. The first insulation layer body 141 and the second extension portion 143 block out a part of the second tab 130, and the first tab 120 blocks out a part of the first extension portion 142. Therefore, the edge of the blocked second tab 130 and the edge of the blocked first extension portion 142 are indicated by dashed lines.

In some embodiments of this application, the first insulation layer 140 is configured to be a bonding layer bonded to the inner surface and the outer surface of the first blank foil region 111b; or the first insulation layer 140 is configured to be a coating layer applied onto the inner surface and the outer surface of the first blank foil region 111b.

In some embodiments, the first insulation layer 140 on the inner surface of the first blank foil region 111b protrudes beyond the first edge 103 and the second edge 104, and the first insulation layer 140 on the outer surface of the first blank foil region 111b also protrudes beyond the first edge 103 and the second edge 104. Therefore, the two first insulation layers 140 may be configured to be bonding layers bonded to the inner surface and the outer surface of the first blank foil region 111b.

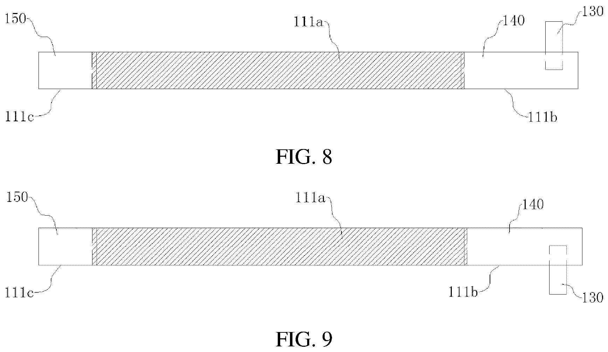

In some embodiments, the first insulation layer 140 includes a first insulation layer body 141 and a first extension portion 142 connected to the first insulation layer body 141; or, the first insulation layer 140 includes a first insulation layer body 141 as well as a first extension portion 142 and a second extension portion 143 connected to the first insulation layer body 141. In this case, the first insulation layer 140 may be configured to be a bonding layer bonded to the inner surfaces and the outer surfaces of the first blank foil region 111b and the first tab 120, or the first insulation layer 140 may be configured to be a bonding layer bonded to the inner surfaces and the outer surfaces of the first blank foil region 111b and the first tab 120 and bonded to the second tab 130. Alternatively, as shown in FIG. 8 to FIG. 9, the first insulation layer may be configured to be a coating layer applied onto the first blank foil region 111b and the first tab 120, or configured to be a coating layer applied onto the first blank foil region 111b, the first tab 120, and the second tab 130.

In some embodiments of this application, the bonding layer is an adhesive tape. The adhesive tape includes a substrate layer and a binder layer. The substrate layer is a substrate of the adhesive tape, so that the adhesive tape is of specified strength and toughness. The binder layer possesses an adhesive property. One side of the binder layer may be bonded and fixed to the substrate, and the other side of the binder layer may be bonded and fixed to a part to be bonded. In some embodiments, the substrate layer includes polyolefin, polyimide, or polyethylene terephthalate; and the binder layer includes polyolefin, polyacrylic acid, rubber, or hot-melt adhesive.

In some embodiments of this application, as shown in FIG. 2 and FIG. 4 to FIG. 7, the first insulation layer 140 covers a part of the first active material region 111a. In other words, a part of the first insulation layer 140 may cover the first blank foil region 111b, and another part of the first insulation layer 140 may cover the first active material region 111a.

A part of the first insulation layer 140 on the inner surface of the first blank foil region 111b may cover the inner surface of the first blank foil region 111b. Another part of the first insulation layer 140 on the inner surface of the first blank foil region 111b may cover the inner surface of the first active material region 111a. A part of the first insulation layer 140 on the outer surface of the first blank foil region 111b may cover the outer surface of the first blank foil region 111b. Another part of the first insulation layer 140 on the outer surface of the first blank foil region 111b may cover the outer surface of the first active material region 111a. In this way, in the length direction of the first electrode plate 111, the first insulation layer 140 on the inner surface of the first blank foil region 111b can fully coat the inner surface of the first blank foil region 111b. The first insulation layer 140 on the outer surface of the first blank foil region 111b can fully coat the outer surface of the first blank foil region 111b.

According to some embodiments of this application, as shown in FIG. 2 and FIG. 4 to FIG. 7, the first electrode plate 111 includes a third blank foil region 111c. In the winding direction of the first electrode plate 111, the first active material region 111a is located between the first blank foil region 111b and the third blank foil region 111c. The third blank foil region 111c is coated with a second insulation layer 150.

In other words, in the winding direction of the first electrode plate 111, the third blank foil region 111c, the first active material region 111a, and the first blank foil region 111b are sequentially connected. After completion of the winding of the electrode assembly, the third blank foil region 111c is located innermost in the electrode assembly.

The initially prepared electrode plate material includes a plurality of first active material regions 111a spaced apart. Two adjacent first active material regions 111a are connected by a blank foil region. After an insulation layer is disposed on the blank foil region, the blank foil region and the insulation layer thereon are cut to form a plurality of first electrode plates 111. A part of the blank foil region forms a first blank foil region 111b of one first electrode plate 111, and another part of the blank foil region forms a third blank foil region 111c of a next first electrode plate 111. A part of the insulation layer forms a first insulation layer 140 on the first blank foil region 111b of one first electrode plate 111, and another part of the insulation layer forms a second insulation layer 150 on the third blank foil region 111c of a next first electrode plate 111.

In some embodiments of this application, a sum of a length of the first insulation layer 140 in the winding direction of the first electrode plate 111 and a length of the second insulation layer 150 in the winding direction of the first electrode plate 111 is not greater than 100 mm. In this way, the length of the first insulation layer 140 is enough to protect the first blank foil region 111b, but without causing an excessive length of the first insulation layer 140 that leads to a problem of material waste.

The length of the first insulation layer 140 in the winding direction of the first electrode plate 111 and the length of the second insulation layer 150 in the winding direction of the first electrode plate 111 are not limited herein, as long as the sum of the length of the first insulation layer 140 in the winding direction of the first electrode plate 111 and the length of the second insulation layer 150 in the winding direction of the first electrode plate 111 satisfies the above condition. For example, the sum of the length of the first insulation layer 140 in the winding direction of the first electrode plate 111 and the length of the second insulation layer 150 in the winding direction of the first electrode plate 111 may be 50 mm, 60 mm, 70 mm, 80 mm, 90 mm, or 100 mm.

In some embodiments of this application, as shown in FIG. 2 and FIG. 4 to FIG. 7, the second insulation layer 150 covers a part of the first active material region 111a. In other words, a part of the second insulation layer 150 may cover the third blank foil region 111c, and another part of the second insulation layer 150 may cover the first active material region 111a.

A part of the second insulation layer 150 on the inner surface of the third blank foil region 111c may cover the inner surface of the third blank foil region 111c. Another part of the second insulation layer 150 on the inner surface of the third blank foil region 111c may cover the inner surface of the first active material region 111a. A part of the second insulation layer 150 on the outer surface of the third blank foil region 111c may cover the outer surface of the third blank foil region 111c. Another part of the second insulation layer 150 on the outer surface of the third blank foil region 111c may cover the outer surface of the first active material region 111a. In this way, in the winding direction of the first electrode plate 111, the second insulation layer 150 on the inner surface of the third blank foil region 111c can fully coat the inner surface of the third blank foil region 111c. The second insulation layer 150 on the outer surface of the third blank foil region 111c can fully coat the outer surface of the third blank foil region 111c.

In some embodiments of this application, the first electrode plate 111 is a positive electrode plate, and the second electrode plate 112 is a negative electrode plate. The innermost coil of the electrode assembly may be a negative electrode plate, and the outermost coil of the electrode assembly may be a positive electrode plate. In this case, the outermost positive electrode plate is coated with the first insulation layer 140, thereby reducing the probability that the burrs on the positive electrode plate penetrate the separator 113 and get connected to the negative electrode plate or the shell. When ending in the above manner, the electrode assembly can be mounted in a packaging bag, and the secondary battery 100 can be a pouch battery.

The innermost coil of the electrode assembly may be a negative electrode plate, and the outermost coil of the electrode assembly is also a negative electrode plate. In other words, the electrode assembly ends with the blank foil region of the negative electrode plate. When ending in the above manner, the electrode assembly can be mounted in a steel shell. Because the steel shell is negatively charged, the electrode assembly that ends with the blank foil region of the negative electrode plate can avoid a short circuit caused by the contact between the negative electrode plate and the steel shell. The outermost side of the ending section of the negative electrode plate even does not need to be coated with the separator 113.

In some embodiments of this application, $L_1$ and $L_2$ satisfy: $1.05 \leq L_1/L_2 \leq 1.2$. In this way, the stroke of the current on the first electrode plate 111 is substantially the same as the stroke of the current on the second electrode plate 112, and the magnetic field generated on the first electrode plate 111 can substantially counteract the magnetic field generated on the second electrode plate 112, thereby reducing the impact caused by the magnetic field generated by the secondary battery 100 onto the electrical device.

In some embodiments of this application, the secondary battery 100 further includes a shell. The shell is cylindrical, and the electrode assembly is disposed in the shell. In other words, the secondary battery 100 is a cylindrical battery or a button battery. Because the cylindrical battery or button battery among the secondary batteries 100 mostly cause an impact on small-sized electrical devices (such as a headset), the secondary battery 100 of this application is based on the technical solution described in the above embodiment, thereby reducing the impact of the magnetic field generated by the secondary battery 100 on the electrical device. In addition, the first insulation layer 140 can cover the first tab 120, thereby reducing the probability that the burrs on the first tab 120 penetrate the separator 113 and contact the second electrode plate 112 or the shell.

The following describes a specific embodiment of a secondary battery 100 of this application in detail.

The secondary battery 100 includes an electrode assembly, a first tab 120, and a second tab 130. The electrode assembly includes a first electrode plate 111, a second electrode plate 112, and a separator 113. The separator 113 is disposed between the first electrode plate 111 and the second electrode plate 112. The first electrode plate 111 includes a first active material region 111a, and the second electrode plate 112 includes a second active material region 112a. The first active material region 111a includes a first winding start end 101, and the second active material region 112a includes a second winding start end 102.

The first tab 120 is electrically connected to the first electrode plate 111. The second tab 130 is electrically connected to the second electrode plate 112. Along the winding direction of the electrode assembly, a distance between the first tab 120 and the first winding start end 101 is $L_1$, and a distance between the second tab 130 and the second winding start end 102 is $L_2$, satisfying: $0.8 \leq L_1/L_2 \leq 1.2$.

The first electrode plate 111 includes a first blank foil region 111b. The first blank foil region 111b is an end section of the first electrode plate 111, and is connected to the first tab 120. The second electrode plate 112 includes a second blank foil region 112b. The second blank foil region 112b is an end section of the second electrode plate 112, and is connected to the second tab 130. A first insulation layer 140 is disposed on both the inner surface and the outer surface of the first blank foil region 111b.

In the width direction of the first electrode plate 111, the first electrode plate 111 includes a first edge 103 and a second edge 104. The first insulation layers 140 on both the inner surface and the outer surface of the first blank foil region 111b protrude beyond the first edge 103 and the second edge 104. One side of the first insulation layer 140 on the inner surface of the first blank foil region 111b is oriented toward one side of the first insulation layer on the outer surface of the first blank foil region, and the two sides oriented toward each other are bonding sides. The distances by which the two first insulation layers 140 protrude beyond the first edge 103 may be equal. The absolute value of the difference between the distances by which the two first insulation layers 140 protrude beyond the first edge 103 may be less than 10 mm. The distances by which the two first insulation layers 140 protrude beyond the second edge 104 may be equal. The absolute value of the difference between the distances by which the two first insulation layers 140 protrude beyond the second edge 104 may be less than 10 mm. Projections of the separator 113 on the inner surface and the outer surface of the first blank foil region 111b in the thickness direction of the first blank foil region 111b cover the protruding parts of the two first insulation layers 140 beyond the first edge 103 and the second edge 104.

The two first insulation layers 140 not only cover the inner surface and the outer surface of the first blank foil region 111b, and the two first insulation layers 140 may further cover a part of the first tab protruding section 122. In addition, the first insulation layer 140 on the inner surface of the first blank foil region 111b may further cover a part of the second tab protruding section 132.

The first electrode plate 111 further includes a third blank foil region 111c. The third blank foil region 111c, the first active material region 111a, and the first blank foil region 111b are sequentially connected in the winding direction of the first electrode plate 111. The third blank foil region 111c is coated with a second insulation layer 150. The first insulation layer 140 covers a part of the first active material, and the second insulation layer 150 covers a part of the first active material.

The following briefly describes an electrical device according to an embodiment of this application.

The electrical device according to an embodiment of this application includes the above secondary battery 100. Because the electrical device according to an embodiment of this application contains the secondary battery 100, the power supply of the electrical device is more stable, thereby reducing the probability of damage to the electrical device caused by a short circuit of the secondary battery 100 or other factors, and improving the user experience.

An embodiment of this application provides an electrical device that uses the secondary battery 100 as a power supply. The electrical device may be, but is not limited to, a portable device (such as a wireless headset), a mobile phone, a tablet computer, a laptop computer, an electric toy, an electric tool, or the like. The types of the electric toy may include a fixed electric toy or a mobile electric toy, such as a game console, an electric car toy, an electric ship toy, and an electric airplane toy.

Although this application has been described with reference to exemplary embodiments, various improvements may be made to the embodiments without departing from the scope of this application, and some components described in the embodiments may be replaced with equivalents. Particularly, to the extent that no structural conflict exists, various technical features mentioned in different embodiments may be combined in any manner. This application is not limited to the specific embodiments disclosed herein, but includes all technical solutions falling within the scope of the claims.

**Claims**

1. A secondary battery (100), **characterized in that**, the secondary battery (100) comprises:

an electrode assembly, comprising a first electrode plate (111), a second electrode plate (112), and two separators (113); wherein the two separators are provided between the first electrode plate (111) and the second electrode plate (112); the first electrode plate (111) comprises a first active material region (111a); the first active material region (111a) comprises a first winding start end (101); the second electrode plate (112) comprises a second active material region (112a); and the second active material region (112a) comprises a second winding start end (102);
a first tab (120), wherein the first tab (120) is electrically connected to the first electrode plate (111); along a winding direction of the electrode assembly, a distance between the first winding start end (101) and the first tab (120) is $L_1$; and a second tab (130), wherein the second tab (130) is electrically connected to the second electrode plate (112); along the winding direction of the electrode assembly, a distance between the second winding start end (102) and the second tab (130) is $L_2$; $0.8 \leq L_1/L_2 \leq 1.2$; wherein,
the first electrode plate (111) comprises a first blank foil region (111b); the first blank foil region (111b) is a winding end section of the first electrode plate (111); the second electrode plate (112) comprises a second blank foil region (112b); the second blank foil region (112b) is a winding end section of the second electrode plate (112); the first tab (120) is connected to the first blank foil region (111b); the second tab (130) is connected to the second blank foil region ( 112b) ; and a first insulation layer (140) is provided on the first blank foil region (111b).

2. The secondary battery (100) according to claim 1, **characterized in that**, both an inner surface of the first blank foil region (111b) and an outer surface of the first blank foil region (111b) are provided with the first insulation layers (140); wherein the inner surface of the first blank foil region (111b) and the outer surface of the first blank foil region (111b) are two surfaces along a thickness direction of the first blank foil region (111b); the inner surface of the first blank foil region (111b) is closer to a winding center of the electrode assembly than the outer surface of the first blank foil region (111b).

3. The secondary battery (100) according to claim 2, **characterized in that**, the first insulation layers (140) comprise bonding layers bonded to the inner surface of the first blank foil region (111b) and the outer surface of the first blank foil region (111b); along a width direction of the first electrode plate (111), the first electrode plate (111) comprises a first edge (103) and a second edge (104); and the first insulation layers (140) on both the inner surface of the first blank foil region (111b) and the outer surface of the first blank foil region (111b) protrude beyond the first edge (103) and the second edge (104); and / or
the first insulation layer (140) covers a connecting portion between the first tab (120) and the first blank foil region (111b).

4. The secondary battery (100) according to claim 3, **characterized in that**, the bonding layers comprise an adhesive tape.

5. The secondary battery (100) according to claim 4, **characterized in that**, a distance by which the first insulation layer (140) on the inner surface of the first blank foil region (111b) protrudes beyond the first edge (103) is $L_3$; a distance by which the first insulation layer (140) on the outer surface of the first blank foil region (111b) protrudes beyond the first edge (103) is $L_4$; $0 \leq |L_3 - L_4| \leq 10$ mm; and projections of the two separators (113) adjacent to the inner surface of the first blank foil region (111b) and the outer surface of the first blank foil region (111b) in the thickness direction of the first blank foil region (111b) cover protruding parts of the two first insulation layers (140) beyond the first edge (103); and / or
a distance by which the first insulation layer (140) on the inner surface of the first blank foil region (111b) protrudes beyond the second edge (104) is $L_5$; a distance by which the first insulation layer (140) on the outer surface of the first blank foil region (111b) protrudes beyond the second edge (104) is $L_6$; $0 \leq |L_5 - L_6| \leq 10$ mm; and projections of the two separators (113) adjacent to the inner surface of the first blank foil region (111b) and the outer surface of the first blank foil region (111b) in the thickness direction of the first blank foil region (111b) cover protruding parts of the two first insulation layers (140) beyond the second edge (104).

6. The secondary battery (100) according to claim 5, **characterized in that**, $1$ mm $\leq |L_3 - L_4| \leq 5$ mm; and / or

$$1 \text{ mm} \leq |L_5 - L_6| \leq 5 \text{ mm}.$$

7. The secondary battery (100) according to claim 3, **characterized in that**, the first tab (120) comprises a first tab connecting section (121) and a first tab protruding section (122); the first tab connecting section (121) overlaps with the first blank foil region (111b); the first tab protruding section (122) protrudes beyond the first blank foil region (111b);

each of the first insulation layers (140) comprises a first insulation layer body (141) and a first extension portion (142); the first insulation layer bodies (141) cover the inner surface of the first blank foil region (111b) and the outer surface of the first blank foil region (111b); and the first extension portions (142) are connected to the corresponding first insulation layer bodies (141) and cover a part of an inner surface of the first tab protruding section (122) and a part of an outer surface of the first tab protruding section (122) respectively; and / or

the second tab (130) comprises a second tab connecting section (131) and a second tab protruding section (132); the second tab connecting section (131) overlaps with the second blank foil region (112b); the second tab protruding section (132) protrudes beyond the second blank foil region (112b);

the first insulation layer (140) on the inner surface of the first blank foil region (111b) further comprises a second extension portion (143); and the second extension portion (143) is connected to the corresponding first insulation layer body (141) and covers a part of the second tab protruding section (132).

8. The secondary battery (100) according to claim 7, **characterized in that**, a dimension by which the first extension portion (142) protrudes beyond the corresponding first insulation layer body (141) is not greater than 50 mm; and / or
a dimension by which the second extension portion (143) protrudes beyond the corresponding first insulation layer body (141) is not greater than 50 mm.

9. The secondary battery (100) according to claim 7 or 8, **characterized in that**, the first insulation layers (140) comprise bonding layers bonded to the inner surface of the first blank foil region (111b) and the outer surface of the first blank foil region (111b); or the first insulation layers (140) comprise coating layers applied onto the inner surface of the first blank foil region (111b) and the outer surface of the first blank foil region (111b).

10. The secondary battery (100) according to claim 1, **characterized in that**, the first insulation layer (140) covers a part of the first active material region (111a).

11. The secondary battery (100) according to claim 1, **characterized in that**, the first electrode plate (111) comprises a third blank foil region (111c); in a winding direction of the first electrode plate (111), the first active material region (111a) is provided between the first blank foil region (111b) and the third blank foil region (111c); and the third blank foil region (111c) is provided with a second insulation layer (150).

12. The secondary battery (100) according to claim 11, **characterized in that**, a sum of a length of the first insulation layer (140) in the winding direction of the first electrode plate (111) and a length of the second insulation layer (150) in the winding direction of the first electrode plate (111) is not greater than 100 mm; and / or
the second insulation layer (150) covers a part of the first active material region (111a).

13. The secondary battery (100) according to claim 1, **characterized in that**, the first electrode plate (111) is a positive electrode plate, and the second electrode plate (112) is a negative electrode plate.

14. The secondary battery (100) according to claim 13, **characterized in that**, $1.05 \leq L_1/L_2 \leq 1.2$.

15. An electrical device, **characterized in that**, the electrical device comprises the secondary battery (100) according to any one of claims 1 to 14.

FIG. 1

FIG. 2

FIG. 3

FIG. 4

FIG. 5

FIG. 6

FIG. 7

EP 4 498 473 A1

FIG. 8

FIG. 9

21

FIG. 10

Europäisches
Patentamt

European
Patent Office

Office européen
des brevets

# EUROPEAN SEARCH REPORT

**Application Number**

EP 24 18 5569

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 610 954 B1 (LG CHEMICAL LTD [KR]) 15 August 2018 (2018-08-15) * claims 1-9 * * paragraphs [0016] - [0027], [0039], [0055], [0056] * * figure 4 * | 1-15 | INV. H01M10/0587 H01M50/531 H01M50/586 H01M10/0525 |

TECHNICAL FIELDS
SEARCHED       (IPC)

H01M

The present search report has been drawn up for all claims

| Place of search | Date of completion of the search | Examiner |
|---|---|---|
| Munich | 26 November 2024 | Riederer, Florian |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 18 5569

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2024

| Patent document cited in search report | | Publication date | Patent family member(s) | | Publication date |
|---|---|---|---|---|---|
| EP 2610954 | B1 | 15-08-2018 | CN | 102668217 A | 12-09-2012 |
| | | | EP | 2610954 A2 | 03-07-2013 |
| | | | JP | 5676620 B2 | 25-02-2015 |
| | | | JP | 5852089 B2 | 03-02-2016 |
| | | | JP | 2012530354 A | 29-11-2012 |
| | | | JP | 2014060173 A | 03-04-2014 |
| | | | KR | 20120018723 A | 05-03-2012 |
| | | | KR | 20130076838 A | 08-07-2013 |
| | | | TW | 201220579 A | 16-05-2012 |
| | | | TW | 201414049 A | 01-04-2014 |
| | | | US | 2012177963 A1 | 12-07-2012 |
| | | | WO | 2012026705 A2 | 01-03-2012 |

EPO FORM P0459

For more details about this annex : see Official Journal of the European Patent Office, No. 12/82